# EUROPEAN PATENT SPECIFICATION

(11) **EP 0 554 321 B1**
(45) Date of publication and mention of the grant of the patent: **08.05.1996**
(21) Application number: 91918848.2
(22) Date of filing: 25.10.1991
(51) Int. Cl.: H04N 5/16

(54) **METHOD AND APPARATUS FOR CLAMPING THE BLACK LEVEL OF A DIGITAL VIDEO SIGNAL**
VERFAHREN UND SCHALTUNGSANORDNUNG ZUR KONSTANTHALTUNG DES SCHWARZWERTPEGELS NACH DER ANALOG/DIGITALWANDLUNG EINES VIDEOSIGNALS
PROCEDE ET APPAREIL SERVANT A FIXER LE NIVEAU DU NOIR D'UN SIGNAL VIDEO NUMERIQUE

(30) Priority: 25.10.1990 GB 9023305
(43) Date of publication of application: 11.08.1993
(73) Proprietor: BRITISH BROADCASTING CORPORATION, London W1A 1AA (GB)
(72) Inventor: CLARKE, C. K. P., British BroadcastingCorporations, Tadworth, Surrey KT20 KT20 (GB)
(74) Representative: Harland, Linda Jane
(86) International application number: GB9101870
(87) International publication number: WO9208315

(56) References cited:
- US-A- 4 124 869
- US-A- 4 210 933
- Patent Abstracts of Japan, Vol 8, No 111, E246, abstract of JP 59- 27682, publ 1984-02-14

## Description

The invention relates to a method and apparatus for clamping the black level of a television signal and, in particular to the problem of stabilising the black level of a composite colour television signal after digital encoding at an analogue to digital converter.

Conventional techniques for television use a clamping pulse generated from the line synchronising pulse to control the d.c. level of the television waveform in the back porch. A feedback circuit is used so that, after a disturbance, such as a change in the average level of the signal, the received level is compared with a reference level and a correction signal applied to gradually correct the error. The feedback technique and the sampled nature of the comparison method dictate that too large a correction cannot be made at one time, because of the stability requirements of the loop. Also, the loop characteristics provide for a degree of noise suppression, by using proportions of the error signal measured on several lines.

Such a technique can be used at the input to an analogue-to-digital converter as a means of ensuring that the signal is accurately located on the signal conversion range of the a-d converter. Nevertheless, this approach is not ideal in that drift or the alignment accuracy of the input circuitry of the converter may still cause the digital coding level corresponding to blanking level to vary.

One approach to stabilising the digital blanking level is to compare the level of the signal during the back porch with a digital reference level. Unfortunately, the quantising steps of the a-d converter are often large compared with the size of the error. According to conventional wisdom, this prevents the correction being made directly in the digital domain, and the signal is added as a contribution to the feedback in the analogue domain before the a-d converter input.

An apparatus for digitally damping the black level of a television signal is disclosed in US-A-4 124 869.

The method and apparatus in accordance with the invention being characterized by converting the input video signal to a digital input signal; measuring the signal level during a blanking period of the input video signal; comparing the measured signal level with a digital reference level to generate a digital error signal; adding a correction signal derived from the error signal to the samples forming the digital input signal with any residue of the truncated addition at each sample being retained for addition with the correction signal to the next sample.

Although generally applicable, the advantages of the system make it particularly suitable for digital processing where parts of the signal are to be moved from their original positions, such as in a picture scrambling technique in which the lines are shuffled to occur in a different order.

A method and apparatus in accordance with the invention will now be described in detail, by way of example, with reference to the drawings, in which:
Figure 1 shows a clamping system in accordance with the invention;
Figures 2(a) and (b) show a measurement circuit for use in the system of Figure 1 in greater detail;
Figures 3(a) and (b) show a modified correction signal generator for use in the system of Figure 1; and
Figure 4 shows an error feedback adder for use in the system of Figure 1.

The growing capabilities of digital integrated circuits now make it preferable to place the final black level stabilisation process after the a-d conversion. In this way, the greater accuracy and stability of digital filtering and signal processing techniques can be benefitted from to obtain an improved measurement of error and greater control over the dynamic characteristics of the correction technique. In this circumstance, a technique known as error feedback can usefully be applied. This is conventionally used to avoid quantising effects, known as 'contouring', in the resulting picture signals when the number of bits has to be reduced at the output of a digital process. The combination of digital measurement and digital correction to the clamping problem is believed to be new. Applying the error feedback technique to the clamping problem allows very small corrections to be added to the average signal level, even though the signal is quantised. The correction can therefore be made as a fixed correction, added equally to all the samples of the line, or as a varying correction intended to compensate for a black level that is changing across the line period.

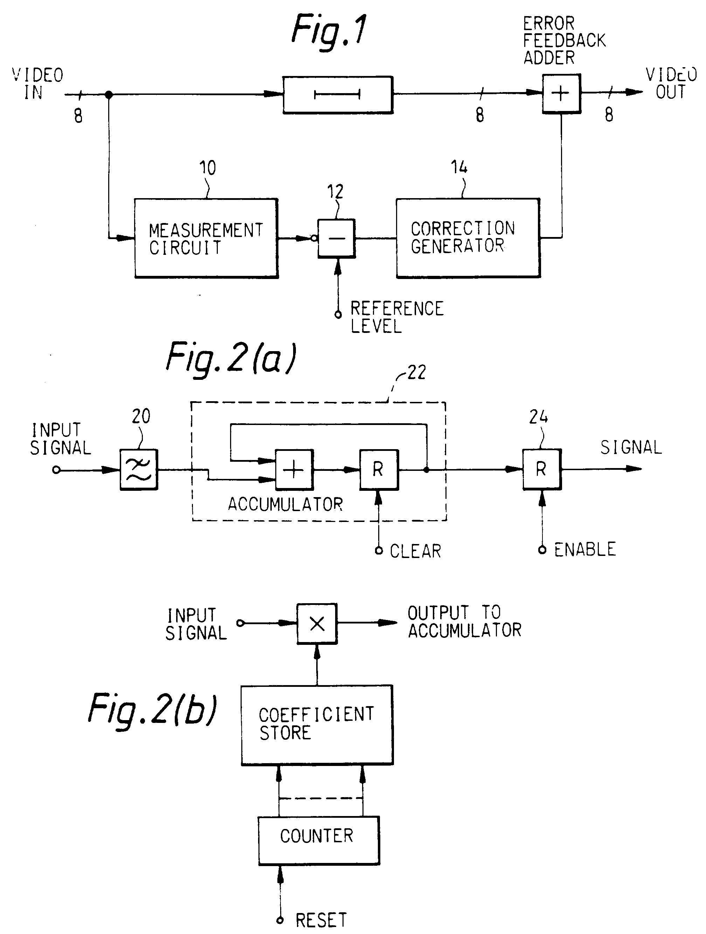

The main components of such a digital clamping system are as shown in Figure 1.

The incoming analogue video signal is, preferably, first applied to a conventional clamp before analogue-to-digital conversion to ensure that the video signal remains within the coding range. A measuring circuit 10 then determines the average level of the signal during the back porch period by measuring over a number of samples. This averaging process results in more precision than is given directly by the conventional 8-bit quantised signal. The measured value is then compared with a . nominal value by subtracting it from a reference level at subtraction circuit 12 to give an error signal. The error signal can be used directly by adding it to the video signal, appropriately delayed, for each sample in the line. The residue of the truncated addition at each sample is retained to be added with the correction value at the next sample. By this means, the average correction can have a value much smaller than the quantisation step of the video signal.

Alternatively, a correction signal of more complex form derived from the error signal at correction generator 14 is added to the video signal.

The action of one form of measurement circuit 10' is shown in more detail in Figures 2(a) and (b). The input signal must be low-pass filtered at filter circuit 20 and the results accumulated in a register 22. The register of the accumulator is cleared at the beginning of the clamp period and the samples following added until the end of the clamp period at which point the resulting sum is loaded into the output register 24 and held for one line period. It should be noted that the averaging process itself has a low-pass filtering action, so the filter at the input is not always necessary. Also, when the sampling is locked to a harmonic of the subcarrier frequency, the averaging process has zero response at subcarrier frequency, when the samples from a whole number of subcarrier cycles are added. If further filtering is required this can be provided by the circuit of Figure 2(b), placed in the circuit of Figure 2(a). Then, when the counter is reset by a line pulse at the beginning of the clamp period, the incoming samples are added in weighted proportions according to the array of stored coefficients.

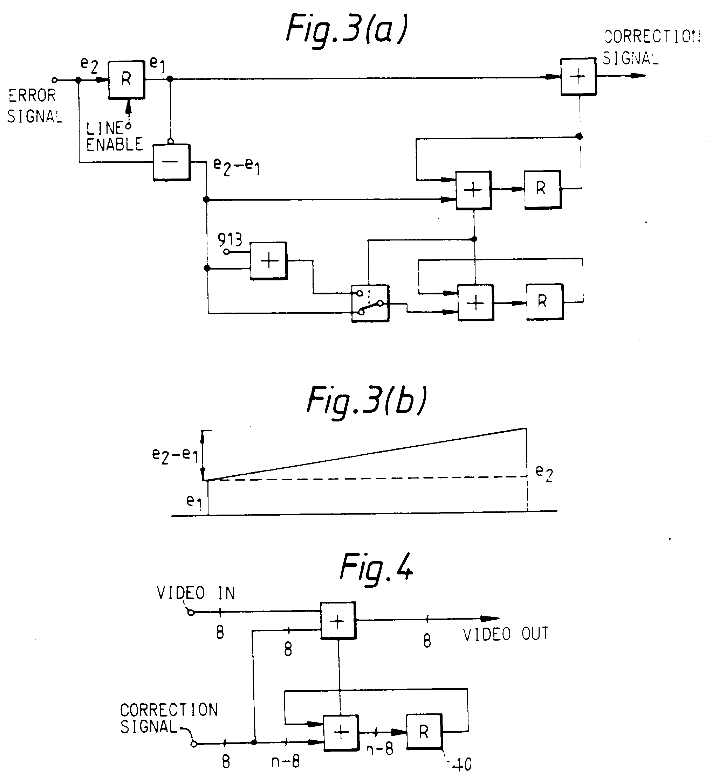

While the difference signal produced by the comparison process can be used directly for zero-order correction as described above, an improvement is shown in Figure 3. Instead of adding a fixed correction throughout the line period, measurements from two consecutive lines e₁ and e₂ are used to give a first-order correction through the line. This is achieved by taking the error signal and dividing it by the number of samples in the line (in this case 1135) by adding it to the initial error signal e₁ through a system of ratio counters. The result is that the value of the correction signal is increased from e₁ to e₂ gradually through the line. To do this, it is necessary for the registers of the ratio counter system to be cleared at the beginning of the line.

The correction signal is added to the incoming video using the error feedback adder arrangement shown in Figure 4. Any of the less significant bits of the correction signal not contributing to the video signal in one addition are held in the register 40 to be included with the correction added to the next sample.

## Claims

1. A method of clamping the black level of a television signal, the method comprising converting the input video signal to a digital input signal; measuring the signal level during a blanking period of the input video signal; comparing the measured signal level with a digital reference level to generate a digital error signal; adding a correction signal derived from the error signal to the samples forming the digital input signal with any residue of the truncated addition at each sample being retained for addition with the correction signal to the next sample.

2. A method according to claim 1 in which the measured signal level is obtained by a weighted summation of the values of successive samples forming at least part of a line during the blanking period.

3. A method according to claim 1 or 2 in which the correction signal is stored for one line period and the stored signal added to each of the samples forming the line from which the measured signal level has been obtained.

4. A method according to any preceding claim in which digital error signals are derived from each of two consecutive lines of the digital input signal, the correction signal added to the samples forming the first of said lines being dependent on the digital error signal obtained from the next consecutive line as well as the digital error signal derived from that said line.

5. A method according to claim 4 in which the correction signals added to each of the samples forming the first of said lines is scaled in dependence on the difference between the error signal obtained from that line and the error signal obtained from the next consecutive line.

6. Apparatus for use in clamping the black level of a television signal; the apparatus comprising an analogue-to-digital converter for converting an input video signal to a digital input signal; a measuring circuit for measuring the signal level during a blanking period of the input video signal; a digital comparator for comparing the measured signal level with a digital reference level to generate a digital error signal; and an adder for adding to the samples forming the digital input signal a correction signal derived from the digital error signal; the adder including means for retaining any residue of the truncated addition at each sample for addition with the correction signal to the next sample.

7. Apparatus according to claim 6 in which the measuring circuit includes means for averaging the values of successive samples forming at least part of a line during the blanking period.

8. Apparatus according to claim 7 in which the said means for averaging includes an accumulator.

9. Apparatus according to any of claims 6 to 8 in which digital error signals are derived from each of two consecutive lines of the digital input signal, means being provided to derive a correction signal for addition to the samples forming the first of said lines dependent on the digital error signal obtained from the next consecutive line as well as the digital error signal derived from that said line.

10. Apparatus according to claim 9, in which said means include a scaler circuit for scaling the correction signals added to the samples forming the first of said lines in dependence on the difference between the error signal obtained from that line and the error signal derived from the next consecutive line.

## Patentansprüche

1. Verfahren zur Konstanthaltung des Schwarzwertpegels eines Fernsehsignals, wobei das Verfahren das Umsetzen des Videoeingangssignals in ein digitales Eingangssignal umfaßt, das Messen des Signalpegels während einer Austastperiode des Videoeingangssignals; das Vergleichen des gemessenen Signalpegels mit einem digitalen Bezugspegel zur Erzeugung eines digitalen Fehlersignals; das Addieren eines Korrektursignals, das aus dem Fehlersignal abgeleitet wird, zu den das digitale Eingangssignal bildenden Abtastwerten, wobei jedwedes Residuum der abgebrochenen Addition bei jedem Abtastwert zur Addition mit dem Korrektursignal zum nächsten Abtastwert zurückgehalten wird.

2. Verfahren nach Anspruch 1, in welchem der gemessene Signalpegel durch eine gewichtete Summation der Werte aufeinanderfolgender Abtastwerte, die zumindest Teil einer Zeile bilden, während der Austastperiode gewonnen wird.

3. Verfahren nach Anspruch 1 oder 2, in welchem das Korrektursignal für eine Zeilenperiode gespeichert wird und das gespeicherte Signal zu jedem der Abtastwerte addiert wird, die die Zeile bilden, aus der gemessene Signalpegel gewonnen wurde.

4. Verfahren nach einem vorhergehenden Anspruch, in welchem die digitalen Fehlersignale aus jeder zweier aufeinanderfolgender Zeilen des digitalen Eingangssignals abgeleitet werden, wobei das Korrektursignal, das zu den Abtastwerten hinzu addiert ist, die die erste dieser Zeilen bilden, vom digitalen Fehlersignal abhängt, das von der nächstfolgenden Zeile gewonnen wird, sowie vom digitalen Fehlersignal, das von dieser Zeile abgeleitet wird.

5. Verfahren nach Anspruch 4, in welchem die Korrektursignale, die zu jedem der Abtastwerte hinzu addiert werden, welche die erste dieser Zeilen bilden, in Abhängigkeit von der Differenz zwischen dem Fehlersignal, das von dieser Zeile gewonnen wird, und dem Fehlersignal, das von der nächstfolgenden Zeile gewonnen wird, skaliert wird.

6. Anordnung zur Verwendung bei der Konstanthaltung des Schwarzwertpegels eines Fernsehsignals; wobei die Anordnung einen Analog/Digitalumsetzer aufweist, der ein Videoeingangssignal in ein digitales Eingangssignal umsetzt; eine Meßschaltung zum Messen des Signalpegels während einer Austastperiode des Videoeingangssignals; einen digitalen Vergleicher zum Vergleichen des gemessenen Signalpegels mit einem digitalen Bezugspegel zum Erzeugen eines digitalen Fehlersignals; und einen Addierer zur Addition eines Korrektursignals, das aus dem digitalen Fehlersignal abgeleitet ist, zu den Abtastwerten, die das digitale Eingangssignal bilden; wobei der Addierer Einrichtungen umfaßt, die jedwedes Residuum der abgebrochenen Addition bei jedem Abtastwert zur Addition mit dem Korrektursignal zum nächsten Abtastwert zurückhalten.

7. Anordnung nach Anspruch 6, in welcher die Meßschaltung Einrichtungen zum Bilden des Durchschnitts der Werte aufeinanderfolgender Abtastwerte, die zumindest Teil einer Zeile bilden, während der Austastperiode umfaßt.

8. Anordnung nach Anspruch 7, in welcher die Einrichtung zum Bilden des Durchschnittswerts einen Akkumulator umfaßt.

9. Anordnung nach einem der Ansprüche 6 bis 8, in welcher digitale Fehlersignale aus jeder zweier aufeinanderfolgender Zeilen des digitalen Eingangssignals abgeleitet werden, Einrichtungen vorgesehen sind, um ein Korrektursignal für eine Addition zu den Abtastwerten, die die erste der Zeilen bilden, abhängig vom digitalen Fehlersignal, das aus der nächstfolgenden Zeile gewonnen wird, sowie vom digitalen Fehlersignal, das aus dieser Zeile abgeleitet wird, abzuleiten.

10. Anordnung nach Anspruch 9, in welcher die Einrichtungen eine Skalierschaltung umfassen, die die Korrektursignale, welche zu den Abtastwerten addiert werden, die die erste dieser Zeilen bilden, in Abhängigkeit von der Differenz zwischen dem Fehlersignal, das aus dieser Zeile gewonnen wird, und dem Fehlersignal, das aus der nächstfolgenden Zeile gewonnen wird, skaliert.

## Revendications

1. Un procédé de fixation du niveau du noir d'un signal de télévision, le procédé comprenant les étapes consistant à : convertir le signal d'entrée vidéo en un signal d'entrée numérique, mesurer le niveau du signal pendant une période de suppression de faisceau noir du signal d'entrée vidéo; comparer le niveau de signal mesuré à un niveau de référence numérique pour engendrer un signal d'erreur numérique; ajouter un signal de correction dérivé du signal d'erreur aux échantillons qui forment le signal d'entrée numérique, tout résidu de l'addition tronquée à chaque échantillon étant retenu pour être ajouté au signal de correction de l'échantillon suivant.

2. Un procédé selon la revendication 1, dans lequel le niveau de signal mesuré est obtenu par une sommation pondérée des valeurs d'échantillons successifs qui font au moins partie d'une ligne pendant la période de suppression de faisceau noir.

3. Un procédé selon la revendication 1 ou 2, dans lequel le signal de correction est mémorisé pendant une période d'une ligne et le signal mémorisé ajouté est ajouté à chacun des échantillons qui forment la ligne à partir de laquelle le niveau de signal mesuré à été obtenu.

4. Un procédé selon une revendication précédente quelconque, dans lequel des signaux numériques d'erreurs sont dérivés de chacune de deux lignes consécutives du signal d'entrée numérique, le signal de correction ajouté aux échantillons qui forment la première desdites lignes étant fonction du signal numérique d'erreur à partir de la ligne qui la suit immédiatement ainsi que du signal numérique d'erreur dérivé de ladite ligne.

5. Un procédé selon la revendication 4, dans lequel les signaux de correction ajoutés à chacun des échantillons qui forment la première desdites lignes est mis à l'échelle en fonction de la différence entre le signal d'erreur obtenu de cette ligne et le signal d'erreur obtenu de la ligne qui la suit immédiatement.

6. Appareil à utiliser pour fixer le niveau du noir d'un signal de télévision; l'appareil comprenant un convertisseur d'analogique à numérique pour convertir un signal d'entrée vidéo en un signal d'entrée numérique; un circuit de mesure pour mesurer le niveau de signal pendant une période de suppression de faisceau noir du signal d'entrée vidéo; un comparateur numérique pour comparer le niveau mesuré du signal à un niveau numérique de référence de manière à engendrer un signal numérique d'erreurs et un additionneur pour ajouter aux échantillons qui forment le signal d'entrée numérique un signal de correction dérivé du signal numérique d'erreurs; l'additionneur incluant un moyen de retenir tout résidu de l'addition tronquée à chaque échantillon pour l'ajouter au signal de correction de l'échantillon suivant.

7. Appareil selon la revendication 6 dans lequel le circuit de mesure inclut un moyen de calcul d'une moyenne des valeurs d'échantillons successifs qui font au moins partie d'une ligne pendant la période de suppression de faisceau noir.

8. Appareil selon la revendication 7 dans lequel ledit moyen de calcul de moyenne inclut un accumulateur.

9. Appareil selon l'une des revendications 6 à 8 dans lequel des signaux numériques d'erreurs sont dérivés de chacune de deux lignes consécutives de signal numérique d'entrée, des moyens étant agencés de manière à dériver un signal de correction à ajouter aux échantillons qui forment la première desdites lignes en fonction du signal numérique d'erreur obtenu de la ligne qui la suit immédiatement ainsi que du signal numérique d'erreur dérivé de cette dite ligne.

10. Appareil selon la revendication 9, dans lequel ledit moyen inclut un circuit de mise à l'échelle pour mettre à l'échelle les signaux de correction ajoutés aux échantillons qui forment la première desdites lignes en fonction de la différence entre le signal d'erreur obtenu de cette ligne et le signal d'erreur dérivé de la ligne qui la suit immédiatement.
